# EUROPEAN PATENT SPECIFICATION

(11) **EP 3 555 512 B1**
(45) Date of publication and mention of the grant of the patent: **28.10.2020**
(21) Application number: 18749371.3
(22) Date of filing: 03.08.2018
(51) Int. Cl.: F16L 19/028, B60T 17/04, F02M 55/00, F02M 55/02

(54) **METHOD OF MANUFACTURING A MALE TUBE FITTING AND TUBE ASSEMBLY COMPRISING A MALE TUBE FITTING**
VERFAHREN ZUR HERSTELLUNG EINER ROHRVERSCHRAUBUNG UND ROHRANORDNUNG MIT EINER ROHRVERSCHRAUBUNG
PROCÉDÉ DE FABRICATION D'UN RACCORD DE TUBE MÂLE ET ASSEMBLAGE DE TUBE COMPRENANT UN RACCORD DE TUBE MÂLE

(30) Priority: 03.08.2017 WO PCT/EP2017/069700
(43) Date of publication of application: 23.10.2019
(73) Proprietor: Cooper-Standard Automotive (Deutschland) GmbH, 89601 Schelklingen (DE)
(72) Inventor: ABBOTT, Sebastian, 69123 Heidelberg (DE)
(74) Representative: Flügel Preissner Schober Seidel
(86) International application number: PCT/EP2018/071119
(87) International publication number: WO 2019/025587

(56) References cited:
- EP-A1- 2 952 796
- EP-A2- 0 976 795
- EP-A2- 2 706 277
- WO-A1-98/39137
- DE-U1-202017 104 112
- JP-A- 2013 231 664
- KR-A- 20130 021 020

## Description

The present invention relates to a method of manufacturing a male tube fitting, particularly to a male tube nut, and to a tube assembly, particularly a brake tubing or a fuel tubing for a motor vehicle, wherein the tube assembly comprises a male tube fitting.

Hydraulic braking systems and male tube fittings are generally known and standardized for example according to ISO 4038 and to DIN 74233-1. Male tube fittings are used to connect a tube to a counterpart in a brake system of a motor vehicle. Conventional male tube fittings have an external thread and a passage extending in the axial direction for receiving the tube. This passage is commonly, and in this text, referred to as a through-hole. In order to fix the tube provided with a flared end to a receiving counterpart of the brake system, the tube is inserted into the passage in such a way that the flared tube end is brought into contact with a contact surface of the male tube fitting. Subsequently, the male tube fitting including the tube is screwed into an opening of the receiving counterpart or into a connecting member. The design of the flared end is similarly standardized, for example in accordance with DIN 74 234:1992-09 or SAE J2879.

EP 2 706 277 A2 discloses a male tube fitting with a thread section and an end section. The thread section and the end section are coated with a friction-reducing layer. Furthermore, the end section is provided with a second layer in order to avoid the storage of torsional energy or deformation when screwing the male tube fitting into the opening of the receiving counterpart. After the application of the first layer, the male tube fitting can be heated to dry and cure the first layer. Moreover, the first layer can be subjected to thermal treatment or modification in order to achieve a thermal destruction of the first layer in parts, leading to a higher friction coefficient.

EP 2 952 796 A1 discloses a male tube fitting having an inner layer and an outer layer. The outer layer includes a polymer and nanoparticles of solid matter and covers the entire surface of the male tube fitting. The inner layer is only applied to contact surfaces of the male tube fitting that come into contact with a tube or a connecting block.

Another male tube fitting is disclosed in DE 20 2017 104 112 U1. This male tube fitting includes a zinc nickel coating serving as an anti-corrosion coating. The anti-corrosion coating can be passivated by application of a passivation coating on the anti-corrosion coating. Moreover, first and second coatings are applied to the male tube fitting, wherein the first coating covers the entire surface of the male tube fitting and the second coating is only applied to a contact surface at an end surface of the male tube fitting.

The object of the invention is to provide a male tube fitting having improved friction compared with male tube fittings of prior art, combined with a reduction in manufacturing complexity.

The object is achieved by a method of manufacturing a male tube fitting according to claim 1 and by a tube assembly according to claim 11. Advantageous embodiments of the method are subject-matter of claims 2 to 10.

According to claim 1, the method of manufacturing a male tube fitting, particularly a male tube nut, comprises the following steps:
a) providing a male tube fitting which comprises
   a head section for applying a tightening torque to the male tube fitting,
   a threaded section having an external thread,
   a contact section configured to contact a fluid-carrying tube and
   a through-hole extending in an axial direction of the male tube fitting;
b) applying an anti-corrosion layer onto the male tube fitting;
c) applying a friction-reducing layer, which consists of a material having organic constituents and inorganic constituents, onto the anti-corrosion layer, thereby obtaining a continuous coating which has a first friction coefficient; and
d) modulating the friction-reducing layer, at least in selected sections, by breaking up molecules in the friction-reducing layer to reduce the quantity or amount of organic constituents in relation to the quantity or amount of inorganic constituents in the friction-reducing layer, thereby obtaining a coating which has a second friction coefficient higher than the first friction coefficient in some selected places.

Thus, the male tube fitting manufactured in accordance with the inventive method comprises two layers, namely an anti-corrosion layer to protect the male tube fitting from corrosion and a friction-reducing layer to reduce friction on the surface of the male tube fitting. The friction-reducing layer comprises organic and inorganic constituents. Organic constituents are particularly waxes and polymers such as polyethylene (PE). Inorganic constituents are particularly silicates. Silicates predominantly serve for anti-corrosion protection.

When a tube is inserted into the through-hole and the male tube fitting is screwed into an internal thread of a connecting member in such a way that it presses the tube against the connecting member, locking the tube in the longitudinal direction, the contact section of the male tube fitting is pressed against the flared end of the tube. Due to the friction between the contact section and the flared end of the tube, the tube is exposed to a torsional load. The low friction coefficient realized by applying the friction-reducing layer allows that the torsional load acting on the tube is significantly reduced.

By the modulation of friction applied to the friction-reducing layer, the quantity or amount of organic constituents in the friction-reducing layer is reduced, leading to a higher friction coefficient in some selected places of the friction-reducing layer, in particular in the region of the threaded section. Thus, the modulation improves the properties of the friction-reducing layer with respect to joint robustness, which is increased whilst minimizing deformation of the flared tube end.

At the same time, the inorganic constituents, namely the silicates, are largely unaffected by the modulation so that the additional anti-corrosion protection provided by them is still available. Furthermore, the inorganic constituents are harder than the organic constituents so that also the wear properties of the friction-reducing layer are maintained.

The modulation of friction is conducted using a plasma treatment for the purpose of breaking up molecules in the friction-reducing layer. Plasma treatment allows a modification of the structure of both the friction-reducing layer and the anti-corrosion layer. This is done with a beam of oxygen ions generated by an open-air plasma system. Thereby, organic molecular chains in the friction-reducing layer are "cracked" into CO and CO₂ compounds, and the organic constituents, for instance organic waxes, are removed or stripped out from the friction-reducing layer.

Preferably, the male tube fitting is subjected to cooling, in particular active cooling at selected places, during the plasma treatment. Under certain circumstances, the choice of a particular plasma setting that is advantageous for obtaining a high friction coefficient at the selected section, for instance the threaded section, may also lead to an undesired increase of the friction coefficient at undesirable places, for instance the contact section. By active cooling the male tube fitting, this effect can be avoided.

Another option, which is not part of the present invention, is to conduct the modulation of friction using a laser treatment for the purpose of breaking up molecules in the friction-reducing layer, whereby both organic and inorganic constituents are affected indiscriminately.

Preferably, in step b), the anti-corrosion layer is applied by immersing the male tube fitting into a bath solution. Moreover, in step c), the friction-reducing layer is preferably applied by immersing the male tube fitting into a bath solution. This allows the bulk application of the layers to male tube fittings so that manufacturing the male tube fittings is conducted in an efficient manner.

After step c), the male tube fitting is preferably subjected to centrifugal spin and heat to ensure an even distribution of the cured layer after application.

Preferably, the anti-corrosion layer is applied by galvanization, wherein preferably after step b), the anti-corrosion layer is passivated. A passivation is a chemical modification of the anti-corrosion layer. In that way, the anti-corrosion properties of the anti-corrosion layer are further improved. The passivation can particularly be conducted by immersing the male tube fitting into electrolytes.

The anti-corrosion layer is preferably a galvanically-applied Zn or ZnNi alloy layer, or a dip-spin-applied zinc-flake or zinc-aluminium-flake layer, referred herein to the zinc-flake layer. The zinc-flake layer is an anti-corrosion layer including a multitude of zinc flakes and usually consisting of a combination of zinc and aluminium flakes which are compounded by an inorganic matrix. When the layer is applied, no hydrogen is produced. Thus, the risk of hydrogen induced stress corrosion cracking is avoided, particularly in the case of high-tensile steel.

Preferably, the thickness of the male tube fitting, in particular of the anti-corrosion layer, is at least partially reduced at the through-hole, wherein preferably the thickness is reduced so as to form a runout.

In a preferred embodiment, an ultraviolet (UV) fluorescence value at the surface of the male tube fitting is measured to determine the content of organic constituents in the friction reducing layer. The fluorescence value can be determined due to the fluorescence of organic constituents.

As generally known, fluorescence is a special form of luminescence. Fluorescence is excited by radiation in an ultraviolet range. When electrons of fluorescing molecules absorb photons, they reach a higher level of energy. However, such an excited state is energetically instable. The electrons, therefore, return to their initial condition, thereby causing the previously absorbed energy to be released once again. This release of energy results in the emission of fluorescent light. Usually, some of the energy is transformed into heat so that the emitted radiation has less energy and, consequently, a longer wavelength.

The fluorescence value can be measured by a detector which uses the so-called confocal measuring principle. Organic constituents are excited by a light emitting diode (LED) with light in an ultraviolet range. The fluorescence intensity depends on the amount of organic constituents at the measuring point. A photodiode measures the intensity of the fluorescence.

The tube assembly according to the invention is particularly a brake tubing or a fuel tubing for a motor vehicle. The tube assembly comprises: a fluid-carrying tube, a connecting member having an internal thread and a male tube fitting configured in accordance with the method according to the invention. The external thread of the male tube fitting is configured to engage with the internal thread of the connecting member.

The tube assembly in accordance with the present invention comprises an especially high friction coefficient in selected areas, in particular in the threaded section. Preferably, the passivation is applied to the anti-corrosion layer before application of the friction reducing layer to the male tube fitting. As described above, the passivation is a chemical modification of the anti-corrosion layer in order to further improve the anti-corrosion properties.

Preferably, the anti-corrosion layer of the male tube fitting is a galvanically-applied Zn or ZnNi alloy layer, or a dip-spin-applied zinc-flake layer. Advantageously, the male tube fitting is made of metal, particularly of steel.

In the following, the invention will be described in detail with reference to preferred embodiments, which are shown in the drawings, wherein:
- Fig. 1: shows the male tube fitting manufactured in accordance with the method described herein in half section;
- Fig. 2a: shows a cross-section of a tube assembly according to a first embodiment;
- Fig. 2b: shows a cross-section of a tube assembly according to a second embodiment;
- Fig. 3a: shows a data chart illustrating the friction coefficient at the threaded section depending on a plasma setting; and
- Fig. 3b: shows a data chart illustrating the friction coefficient at the contact section depending on the plasma setting.

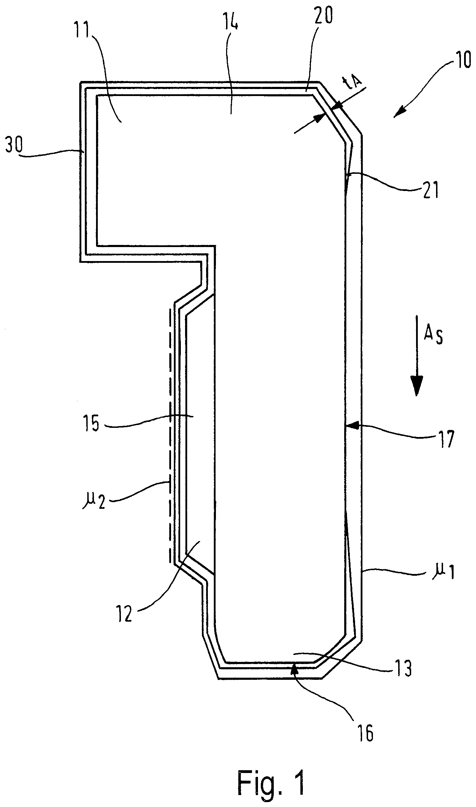

Referring to Fig. 1, there is shown in half section a male tube fitting 10 manufactured in accordance with the method according to the present invention. The male tube fitting 10 comprises a head section 11 for applying a tightening torque to the male tube fitting 10, a threaded section 12 having an external thread 15, a contact section 13 having a contact face 16 and a through-hole 17, which extends in an axial direction As of the male tube fitting 10.

In the method according to the invention, an anti-corrosion layer 20 is first applied to the male tube fitting 10. Subsequently, a friction-reducing layer 30 is applied to the male tube fitting 10 to obtain a first friction coefficient µ₁. Then, the friction-reducing layer 30 is friction modulated, at least in the threaded section 12. Accordingly, the male tube fitting 10 comprises two layers 20, 30, namely the anti-corrosion layer 20 to protect the male tube fitting 10 from corrosion and the friction-reducing layer 30 to reduce friction on the surface of the male tube fitting 10. However, the friction-reducing layer 30 is not homogenous, but comprises selected places, i. e. in particular in the threaded section 12, which have a higher friction coefficient µ₂ than the friction coefficient µ₁ in the remainder of the friction-reducing layer 30.

The anti-corrosion layer 20 can be a galvanically-applied Zn or ZnNi alloy layer, or a dip-spin-applied zinc-flake layer. Preferably, the galvanically-applied layer is a 12 % Ni alloy layer.

The friction-reducing layer 30 comprises organic and inorganic constituents. Organic constituents are particularly waxes and polymers such as polyethylene (PE). Inorganic constituents are particularly silicates. Silicates predominantly serve for anti-corrosion protection.

Due to the friction-reducing layer 30, the male tube fitting 10 has a first friction coefficient µ₁. In particular in the threaded section 12, a modulation of friction is applied to the friction-reducing layer 30 by breaking up molecules in the friction-reducing layer 30. Thereby, organic constituents in the friction-reducing layer 30 are considerably reduced in relation to the inorganic constituents so that the threaded section 12 has a second friction coefficient µ₂. The second friction coefficient µ₂ is higher than the first friction coefficient µ₁.

Either a plasma treatment or, alternatively, a laser treatment can be conducted in order to break up the molecules in the in the friction-reducing layer 30. However, the plasma treatment is more advantageous and, therefore, this invention makes use of the plasma treatment. The plasma can be generated through a high-voltage discharge or, according to the invention, with a stream or beam of oxygen ions generated by an open-air plasma system.

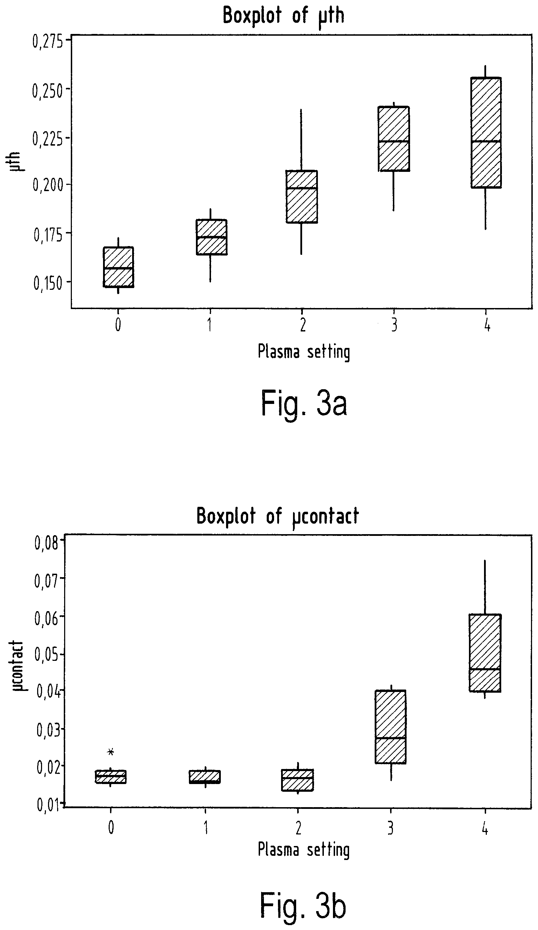

Fig. 3a illustrates the effect that a particular plasma setting has on the friction coefficient µ₂ at the threaded section 12, and Fig. 3b illustrates the effect that the same plasma setting has on the friction coefficient µ₁ at the contact section 13. The plasma settings 0 to 4 shown in both Fig. 3a and 3b refer to the plasma. The higher the plasma setting, the more aggressive the plasma, i.e. particularly the higher the resulting temperature of the surface of the treated male tube fitting or tube nut.

As Fig. 3a and 3b show, the increase of the plasma setting leads to a continuous increase of the friction coefficient µ₂ at the threaded section 12, as desired, whereas the friction coefficient µ₁ at the contact section 13 initially remains constant by approximation (plasma settings 0 to 2), and then rises when the male tube fitting 10 is overheated (plasma settings 3 to 4).

While an increase of the friction coefficient µ₂ is desired, the rise of the friction coefficient µ₁ through plasma settings 3 and 4 is undesired. In order to avoid this effect, the male tube fitting 10 can be subjected to a cooling, particularly to an active cooling at selected places, during the plasma treatment.

The modulation of friction by open-air plasma further allows keeping the inorganic constituents, namely the silicates, intact. The additional anti-corrosion protection provided by them is still available. The inorganic constituents are also harder than the organic constituents so that also the wear properties of the friction-reducing layer are maintained.

Before and/or during and/or after the modulation of friction an ultraviolet (UV) fluorescence value at the surface of the male tube fitting 10 is measured to determine the content of organic constituents in the friction reducing layer 30. For example, the UV fluorescence value dropped by the modulation of friction from an average of 3309 units to 1116 units.

The thickness t_{A} of the anti-corrosion layer 20 of a galvanically applied Zn or Zn-AI alloy layer is partially reduced in the through-hole 17. Thereupon, the addition of a mixed organic and inorganic sealer ensures that this reduction does not affect the corrosion resistance of the male tube fitting.

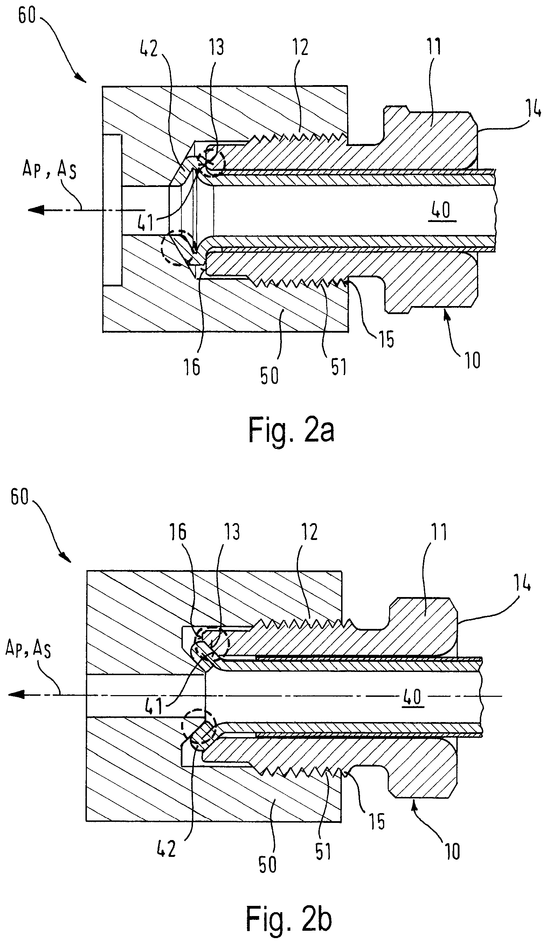

Referring now to Fig. 2a, 2b, there are shown embodiments of a tube assembly 60 according to the invention with a male tube fitting 10 manufactured in accordance with the method described above.

As Fig. 2a and 2b show, the tube assembly 60 comprises a connecting member 50 having an inner thread 51. Furthermore, a fluid-carrying tube 40 is provided. The fluid-carrying tube 40 has an abutment face 41 formed by a flared end 42. Flared ends 42 of tubes 40 are standardized. Fig. 2a shows a flared end 42 having form F according to DIN 74 234:1992-09, whereas Fig. 2b shows a flared end 42 having form E.

In either of the two embodiments, the flared end 42 is in contact with the connecting member 50. The fluid-carrying tube 40 is received in the through-hole 17 of the male tube fitting 10 in such a way that the contact face 16 of the male tube fitting 10 contacts the abutment face 41 of the fluid-carrying tube 40. The male tube fitting 10 with the fluid-carrying tube 40 received in the through-hole 17 is screwed into the connecting member 50. Thus, the external thread 15 present in the threaded section 12 of the male tube fitting 10 is in engagement with the inner thread 51 of the connecting member 50. The male tube fitting 10 presses the fluid-carrying tube 40 against the connecting member 50 so that the fluid-carrying tube 40 is axially locked.

By screwing the male tube fitting 10 into the connecting member 50, the axial direction As of the male tube fitting 10 becomes coaxial with the axial direction Ap of the tube assembly 60.

By applying the friction-reducing layer 30 to the male tube fitting 10, a first friction coefficient µ₁ is achieved. This is advantageous, particularly in the area where the contact face 16 of the male tube fitting 10 contacts the abutment face 41 of the fluid-carrying tube 40. When screwing the male tube fitting 10 against the abutment face 41, torsional load is applied to the fluid-carrying tube 40. In order to reduce the torsional load, the reduction of friction is particularly necessary in the area around the contact face 16, which is done by applying the friction-reducing layer 30.

By the friction modulation of the friction-reducing layer 30, at least in the threaded section 12, the organic constituents in the friction-reducing layer 30 are reduced so that a second friction coefficient µ₂ higher than the first friction coefficient µ₁ is achieved.

The male tube fitting 10 and the tube assembly 60 shown in the drawings have in common that they reduce the friction in the area of the external thread 15 and therefore simplify the screwing of the male tube fitting 10 into the connecting member 50.

### Reference Signs

- 10: male tube fitting
- 11: head section
- 12: threaded section
- 13: contact section
- 14: screw head
- 15: external thread
- 16: contact face
- 17: through-hole
- 20: anti-corrosion layer
- 21: runout
- 30: friction-reducing layer
- 40: fluid-carrying tube
- 41: abutment face
- 42: flared end
- 50: connecting member
- 51: inner thread
- 60: tube assembly
- A_{P}: axial direction
- As: axial direction
- t_{A}: thickness
- µ₁: first friction coefficient
- µ₂: second friction coefficient

## Claims

1. A method of manufacturing a male tube fitting (10), comprising the following steps:
a) providing a male tube fitting (10) which comprises
a head section (11) for applying a tightening torque to the male tube fitting (10),
a threaded section (12) having an external thread (15),
a contact section (13) configured to contact a fluid-carrying tube (40) and
a through-hole (17) extending in an axial direction (As) of the male tube fitting (10);
b) applying an anti-corrosion layer (20) onto the male tube fitting (10);
c) applying a friction-reducing layer (30), which consists of a material having organic constituents and inorganic constituents, onto the anti-corrosion layer (20), thereby obtaining a continuous coating which has a first friction coefficient (µ₁); and
d) modulating the friction-reducing layer (30) at least in selected sections using a plasma treatment for breaking up molecules in the friction-reducing layer (30) to reduce the quantity of organic constituents in relation to the quantity of inorganic constituents in the friction-reducing layer (30), thereby obtaining a coating which has a second friction coefficient (µ₂) higher than the first friction coefficient (µ₁) in some selected places;
wherein the plasma is generated with a stream of oxygen ions generated by an open-air plasma system.

2. The method of claim 1, **characterized by**
cooling the male tube fitting (10) during the plasma treatment.

3. The method of claim 1 or 2, **characterized by**
immersing the male tube fitting (10) into a bath solution to apply the anti-corrosion layer (20) in step b).

4. The method of any of claims 1 to 3, **characterized by**
immersing the male tube fitting (10) into a bath solution to apply the friction-reducing layer (30) in step c).

5. The method of any of claims 1 to 4, **characterized by**
applying the anti-corrosion layer (20) by galvanization in step b).

6. The method of claim 5, **characterized in that**
the anti-corrosion layer (20) is a galvanically-applied Zn or ZnNi alloy layer.

7. The method of any of claims 1 to 6, **characterized in that**
the anti-corrosion layer (20) is a dip-spin-applied zinc-flake layer.

8. The method of any of claims 5 to 7, **characterized by**
passivating the anti-corrosion layer (20) after the galvanization process.

9. The method of any of claims 1 to 8, **characterized in that**
the male tube fitting (10) is made of metal, particularly of steel.

10. The method of any of claims 1 to 9, **characterized by**
measuring an ultraviolet (UV) fluorescence value at the surface of the male tube fitting (10) to determine the content of organic constituents in the friction reducing layer (30).

11. A tube assembly (60), particularly a brake tubing or a fuel tubing for a motor vehicle, the tube assembly (60) comprising:
a fluid-carrying tube (40); and
a connecting member (50) having an internal thread (51);
**characterized by** a male tube fitting (10) as manufactured by the method of any of claims 1 to 10;
wherein the internal thread (51) is configured to engage with the external thread (15) of the male tube fitting (10).

## Patentansprüche

1. Verfahren zur Herstellung einer Außenrohrverschraubung (10), umfassend die folgenden Schritte:
a) Bereitstellen einer Außenrohrverschraubung (10), die umfasst
einen Kopfabschnitt (11) zum Aufbringen eines Anziehdrehmoments auf die Außenrohrverschraubung (10),
einen Gewindeabschnitt (12) mit einem Außengewinde (15),
einen Kontaktabschnitt (13), der ausgebildet ist, ein flüssigkeitsführendes Rohr (40) zu kontaktieren, und
ein Durchgangsloch (17), das sich in einer axialen Richtung (A_{S}) der Außenrohrverschraubung (10) erstreckt;
b) Aufbringen einer Korrosionsschutzschicht (20) auf die Außenrohrverschraubung (10);
c) Aufbringen einer reibungsreduzierenden Schicht (30), die aus einem Material mit organischen Bestandteilen und anorganischen Bestandteilen besteht, auf die Korrosionsschutzschicht (20), wodurch eine kontinuierliche Beschichtung erhalten wird, die einen ersten Reibungskoeffizienten (µ₁) aufweist; und
d) Modulieren der reibungsreduzierenden Schicht (30) zumindest in ausgewählten Abschnitten unter Verwendung einer Plasmabehandlung zum Aufbrechen von Molekülen in der reibungsreduzierenden Schicht (30), um die Menge an organischen Bestandteilen im Verhältnis zu der Menge an anorganischen Bestandteilen in der reibungsreduzierenden Schicht (30) zu reduzieren, wodurch eine Beschichtung erhalten wird, die einen zweiten Reibungskoeffizienten (µ₂) aufweist, der an einigen ausgewählten Stellen höher als der erste Reibungskoeffizient (µ₁) ist;
wobei das Plasma mit einem Strom von Sauerstoffionen erzeugt wird, der von einem Freiluft-Plasmasystem erzeugt wird.

2. Verfahren nach Anspruch 1, **dadurch gekennzeichnet, dass** die Außenrohrverschraubung (10) während der Plasmabehandlung gekühlt wird.

3. Verfahren nach Anspruch 1 oder 2, **gekennzeichnet durch** Eintauchen der Außenrohrverschraubung (10) in eine Badlösung zum Aufbringen der Korrosionsschutzschicht (20) in Schritt b).

4. Verfahren nach einem der Ansprüche 1 bis 3, **gekennzeichnet durch** Eintauchen der Außenrohrverschraubung (10) in eine Badlösung zum Aufbringen der reibungsreduzierenden Schicht (30) in Schritt c).

5. Verfahren nach einem der Ansprüche 1 bis 4, **gekennzeichnet durch** das Aufbringen der Korrosionsschutzschicht (20) durch Galvanisieren in Schritt b).

6. Verfahren nach Anspruch 5, **dadurch gekennzeichnet, dass** die Korrosionsschutzschicht (20) eine galvanisch aufgebrachte Zn- oder ZnNi-Legierungsschicht ist.

7. Verfahren nach einem der Ansprüche 1 bis 6, **dadurch gekennzeichnet, dass** die Korrosionsschutzschicht (20) eine im Tauchschleuderverfahren aufgetragene Zinklamellen-Schicht ist.

8. Verfahren nach einem der Ansprüche 5 bis 7, **gekennzeichnet durch** die Passivierung der Korrosionsschutzschicht (20) nach dem Galvanisierungsprozess.

9. Verfahren nach einem der Ansprüche 1 bis 8, **dadurch gekennzeichnet, dass** die Außenrohrverschraubung (10) aus Metall, insbesondere aus Stahl, hergestellt ist.

10. Verfahren nach einem der Ansprüche 1 bis 9, **dadurch gekennzeichnet, dass** ein Ultraviolett (UV) Fluoreszenzwert an der Oberfläche der Außenrohrverschraubung (10) gemessen wird, um den Gehalt an organischen Bestandteilen in der reibungsreduzierenden Schicht (30) zu bestimmen.

11. Rohranordnung (60), insbesondere eine Bremsleitung oder eine Kraftstoffleitung für ein Kraftfahrzeug, wobei die Rohranordnung (60) umfasst:
ein flüssigkeitsführendes Rohr (40); und
ein Verbindungselement (50) mit einem Innengewinde (51);
**gekennzeichnet durch** eine Außenrohrverschraubung (10), die durch das Verfahren nach einem der Ansprüche 1 bis 10 hergestellt ist;
wobei das Innengewinde (51) ausgebildet, in das Außengewinde (15) der Außenrohrverschraubung (10) einzugreifen.

## Revendications

1. Procédé de fabrication d'un raccord de tube mâle (10), comprenant les étapes suivantes consistant à :
a) fournir un raccord de tube mâle (10) qui comprend
une section de tête (11) pour appliquer un couple de serrage au raccord de tube mâle (10),
une section filetée (12) ayant un pas de vis externe (15),
une section de contact (13) configurée pour venir en contact avec un tube de transport de fluide (40), et
un trou traversant (17) s'étendant dans une direction axiale (As) du raccord de tube mâle (10) ;
b) appliquer une couche anticorrosion (20) sur le raccord de tube mâle (10) ;
c) appliquer une couche de réduction de friction (30), qui est constituée d'un matériau ayant des constituants organiques et des constituants inorganiques, sur la couche anticorrosion (20), en obtenant ainsi un revêtement continu qui a un premier coefficient de friction (m₁) ; et
d) moduler la couche de réduction de friction (30) au moins dans des sections sélectionnées en utilisant un traitement par plasma afin de rompre les molécules dans la couche de réduction de friction (30) et réduire la quantité de constituants organiques en relation à la quantité de constituants inorganiques dans la couche de réduction de friction (30), en obtenant ainsi un revêtement qui a un second coefficient de friction (m2) plus élevé que le premier coefficient de friction (m1) à certains emplacements sélectionnés ;
dans lequel le plasma est généré avec un flux d'ions oxygène généré par un système de plasma à l'air libre.

2. Procédé selon la revendication 1, **caractérisé par**
l'opération consistant à refroidir le raccord de tube mâle (10) pendant le traitement par plasma.

3. Procédé selon la revendication 1 ou 2, **caractérisé par**
l'opération consistant à immerger le raccord de tube mâle (10) dans un bain de solution pour appliquer la couche anticorrosion (20) dans l'étape b).

4. Procédé selon l'une quelconque des revendications 1 à 3, **caractérisé par** l'opération consistant à immerger le raccord de tube mâle (10) dans un bain de solution pour appliquer la couche de réduction de friction (30) dans l'étape b).

5. Procédé selon l'une quelconque des revendications 1 à 4, **caractérisé par** l'opération consistant à appliquer la couche anticorrosion (20) par galvanisation dans l'étape b).

6. Procédé selon la revendication 5, **caractérisé en ce que**
la couche anticorrosion (20) est une couche de Zn ou d'alliage ZnNi appliquée de façon galvanique.

7. Procédé selon l'une quelconque des revendications 1 à 6, **caractérisé en ce que**
la couche anticorrosion (20) est une couche de lamelles de zinc appliquées par trempage-rotation ("dip-spin").

8. Procédé selon l'une quelconque des revendications 5 à 7, **caractérisé par** l'opération consistant à passiver la couche anticorrosion (20) après le processus de galvanisation.

9. Procédé selon l'une quelconque des revendications 1 à 8, **caractérisé en ce que**
le raccord de tube mâle (10) est fait en métal, en particulier en acier.

10. Procédé selon l'une quelconque des revendications 1 à 9, **caractérisé par** l'opération consistant à mesurer une valeur de fluorescence aux ultraviolets (UV) à la surface du raccord de tube mâle (10) pour déterminer la teneur de constituants organiques dans la couche de réduction de friction (30).

11. Assemblage de tube (60), en particulier un tubage pour frein ou un tubage pour carburant destiné à un véhicule à moteur, l'assemblage de tube (60) comprenant :
un tube de transport de fluide (40) ; et
un élément de connexion (50) ayant un pas de vis interne (51) ;
**caractérisé par** un raccord de tube mâle (10) tel que fabriqué par le procédé selon l'une quelconque des revendications 1 à 10 ;
dans lequel le pas de vis interne (51) est configuré pour s'engager avec le pas de vis externe (15) du raccord de tube mâle (10).
